# EUROPÄISCHE PATENTSCHRIFT

(11) **EP 2 097 641 B1**
(45) Veröffentlichungstag und Bekanntmachung des Hinweises auf die Patenterteilung: **15.02.2012**
(21) Anmeldenummer: 07847800.5
(22) Anmeldetag: 04.12.2007
(51) Int. Cl.: F03D 1/00, F03D 11/00, F03D 11/02

(54) **LEISTUNGSVERZWEIGTES WINDKRAFTGETRIEBE**
POWER-SPLIT WIND POWER GEARBOX
TRANSMISSION D'ÉOLIENNE À COUPLE DIVISÉ

(30) Priorität: 04.12.2006 DE 102006057055
(43) Veröffentlichungstag der Anmeldung: 09.09.2009
(73) Patentinhaber: Bosch Rexroth AG, 70184 Stuttgart (DE)
(72) Erfinder: BERGER, Günter, 44577 Castrop-Rauxel (DE); BAUER, Gerhard, 58453 Witten (DE)
(74) Vertreter: Kietzmann, Lutz
(86) Internationale Anmeldenummer: PCT/EP2007/063300
(87) Internationale Veröffentlichungsnummer: WO 2008/068260

(56) Entgegenhaltungen:
- EP-A- 1 243 791
- WO-A-96/11338
- WO-A-03/031812
- US-A- 5 423 726

## Beschreibung

Die vorliegende Erfindung betrifft ein leistungsverzweigtes Windkraftgetriebe zur Übertragung eines von einer Rotornabe erzeugten Drehmoments auf eine relativ hierzu schneller drehende Abtriebswelle zum Antrieb eines elektrischen Generators, wobei mindestens zwei parallel geschaltete Planetenstufen zur getriebeinternen leistungsverzweigten Übersetzung vorgesehen sind, wobei ferner zur Ankoppelung der Rotornabe ein getriebeeingangsseitiges Verbindungsringelement vorgesehen ist, das über ein Großwälzlager drehbar gegenüber einem drehfesten Getriebegehäuse gelagert ist, indem der Lagerinnenring des Großwälzlager am Verbindungsringelement angebracht ist, wogegen der Lageraußenring des Großwälzlagers an dem drehfesten Getriebegehäuse angebracht ist.

Bei einer Windkraftanlage der hier interessierenden Art ist im Leistungsfluss zwischen einem die Windenergie in eine Drehbewegung umsetzenden Rotor und einem die Drehbewegung in elektrische Energie umwandelnden Generator ein Getriebe mit einer Übersetzung ins Schnelle angeordnet. Da die Baugruppen der Windkraftanlage meist innerhalb einer Kapsel an der Spitze eines Turmes platziert werden, sind möglichst kompakte Getriebe mit geringer Masse wünschenswert. Diese Forderung steht allerdings im Zielkonflikt mit dem Trend nach immer größeren Windkraftanlagen höherer Leistung, was unter anderem auch leistungsfähigere Getriebe bedarf. Um deren Masse in Grenzen zu halten, werden in jüngster Zeit die hier interessierenden leistungsverzweigten Windkraftgetriebe eingesetzt.

Aus der EP 1 240 443 A1 geht ein gattungsgemäßes leistungsverzweigtes Windkraftgetriebe hervor. Dieses besteht im Wesentlichen aus einer antriebsseitig symmetrisch aufgebauten Planetengetriebeeinheit, welche aus mindestens zwei gleich dimensionierten parallel geschalteten leistungsverzweigenden Planetenstufen besteht. Zum abtriebsseitigen Zusammenführen des durch die Planetenstufen geteilten Momentenflusses ist eine lastausgleichende Differenzialgetriebestufe nachgeschaltet, welche entweder nach Art eines passiven Differenzials oder auch als aktives Differenzial in Form eines Ausgleichsplanetengetriebes ausgebildet sein kann. Daneben kann das aktive Differenzial auch eine axial weich gelagerte und entgegengesetzt schrägverzahnte Ausgleichsstirnradpaarung sein.

Bei allen Ausführungsformen ist eingangsseitig dieses leistungsverzweigten Windkraftgetriebes eine normale Antriebswelle vorgesehen, woran per Welle-Nabe-Verbindung entweder direkt der Rotor der Windkraftanlage oder eine distanzüberbrückende Rotorwelle anschließbar ist. Getriebeinnenseitig ist die Antriebswelle an den gemeinsamen Planetenträger der parallel geschalteten Planetenstufen angekoppelt. Die Festlegung dieser Konstruktion auf eine normale Welle als getriebeeingangsseitige Antriebswelle führt jedoch - falls der Rotor direkt am Windkraftgetriebe angebracht werden soll - zu dem Problem, den relativ großen Durchmesser einer Rotornabe auf den kleinen Durchmesser der Antriebswelle zu führen. Der Kraftfluss müsste von der Rotornabe kommend, also zunächst von außen nach innen auf die Antriebswelle geleitet werden. Der Rotor einer Windkraftanlage liefert jedoch nicht allein ein reines Drehmoment. Wegen eigener Gewichtskräfte und durch den Wind verursachte Wechselkräfte und -momente am Rotorblatt und dergleichen ist die Antriebswelle insbesondere auch störenden Biegemomenten und Querkräften ausgesetzt. Diese können neben extremen Lagerbelastungen bei der Antriebswelle auch zu Störungen im Zahneingriff im Getriebe führen und damit zu erhöhtem Verschleiß.

Aus der WO 02/14690 geht eine technische Lösung hervor, welche die vorstehend erläuterten Probleme versucht dadurch zu lösen, in dem unter Verzicht auf eine normale Antriebswelle die Rotornabe mit dem gegebenen großen Durchmesser direkt an einen Planetenträger einer getriebeeingangsseitigen Planetenstufe angebracht ist, welcher auf einen entsprechenden Durchmesser nach radial außen erweitert worden ist. Der nach radial außen über den Durchmesser des Hohlrades der eingangsseitigen Planetenstufe erweiterte Planetenträger stellt weiterhin auch die Verbindung zu einem Großwälzlagers her, über welches der Rotor am ortsfesten Getriebegehäuse oder anderen Trägerstrukturen gelagert ist. Durch dieses Konstruktion wird der Vorteil erzielt, dass störende Lastkräfte - wie Biegemomente und Querkräfte - über die Rotornabe direkt in das Großwälzlager eingeleitet werden und hierüber in die ortsfeste Trägerstruktur, wogegen das Drehmoment - hiervon befreit - von der Rotornabe in den Planententräger und von hieraus in die erste Planetenstufe eingeleitet wird. Angetrieben wird hier also der Planetenträger, wogegen das Hohlrad nicht drehbar mit der tragenden Struktur gekoppelt ist. Den Abtrieb der Planetenstufe bildet das Sonnenrad. Durch den gewählten Aufbau der beiden in Reihe geschalteten Planetenstufen findet keine Leistungsverzweigung innerhalb der beiden Planetenstufen statt, sondern jede einzelne Stufe ist für die gesamte vom Rotor zur Verfügung gestellte Leistung zu dimensionieren. Dies steht einer Durchmesserreduzierung des Hohlrades und damit indirekt des Außendurchmessers des Getriebes entgegen, weil das Prinzip der bei gekoppelten Planetengetrieben vorteilhafterweise auftretenden eingangsseitigen Leistungsverzweigung nicht genutzt wird.

Zwar werden bei dieser technischen Lösung konstruktionsbedingt wegen der Krafteinleitung auf einen großen Durchmesser die störenden Biegemomente und Querkräfte abgeschwächt, allerdings nicht gänzlich eliminiert, so dass sich die störenden Verformungen der Bauelemente, die im Kraftfluss liegen, über den Planetenträger auf die Verzahnung zwischen Planetenrädern und Hohl- sowie Sonnenrad auswirken.

Des Weiteren geht aus der EP 1 243 791 A2 ein leistungsverzweigtes Windkraftgetriebe zur Übertragung eines von einer Rotornabe erzeugten Drehmoments auf ein relativ hierzu schneller drehendes Abtriebsritzel zum Antrieb eines elektrischen Generators hervor, wobei dieses Windkraftgetriebe dabei zwei Planetenstufen zur getriebeinternen Übersetzung umfasst. Zur Ankoppelung der Rotornabe ist getriebeeingangsseitig ein Verbindungsringelement vorgesehen, welches gegenüber einem drehfesten Getriebegehäuse durch ein Großwälzlager drehbar gelagert ist. Ein Lagerinnenring dieses Großwälzlagers ist hierbei am Verbindungsringelement angebracht, während ein Lageraußenring mit dem Getriebegehäuse in Kontakt steht. Das Verbindungsringelement verteilt nun das von der Rotornabe erzeugte Drehmoment an die beiden Planetenstufen, indem es zum einen mit einem Planetensteg der ersten Planetenstufe und mit einem Hohlrad der zweiten Planetenstufe verbunden ist.

Es ist die Aufgabe der vorliegenden Erfindung ein leistungsverzweigtes Windkraftgetriebe der eingangs beschriebenen Art zu schaffen, welches zur direkten Ankopplung an einen Rotor geeignet ist, und sich durch eine minimale Baugröße auszeichnet, sowie eine Leistungsverzweigung ermöglicht.

Die Aufgabe wird ausgehend von einem leistungsverzweigten Windkraftgetriebe gemäß dem Oberbegriff von Anspruch 1 in Verbindung mit dessen kennzeichnenden Merkmalen gelöst.

Die nachfolgenden abhängigen Ansprüche geben vorteilhafte Weiterbildungen der Erfindung wieder.

Die Erfindung schließt die technische Lehre ein, dass die Ankopplung der Rotornabe mittels eines getriebeeingangsseitigen Verbindungsringelements erfolgt, das über ein Großwälzlager drehbar an einem drehfesten Getriebegehäuse gelagert ist, indem der Lagerinnenring des Großwälzlager am Verbindungsringelement angebracht ist, wogegen der Lageraußenring des Großwälzlagers an dem drehfesten Getriebegehäuse angebracht ist. Zudem verteilt das Verbindungsringelement im Sinne einer Funktionsintegration neben der Funktion in Bezug auf die Rotorlagerung auch das von der Rotornabe erzeugte Drehmoment an angeschlossene Hohlräder der parallelgeschalteten Planetenstufen.

Der Vorteil der erfindungsgemäßen Lösung liegt darin, dass hierdurch zum einen eine verschleißarm Windkraftanlage mit direkt am Windkraftgetriebe angekoppelten Rotor eine höhere Leistungsklasse darstellbar ist, wobei das Konstruktionsprinzip mit integriertem Großwälzlager auf Niveau des Rotornabendurchmessers eine kompakte Bauform gestattet. Zum anderen wird hierbei eine Leistungsverzweigung ermöglicht.

Gemäß einer weiteren die Erfindung verbessernden Maßnahme ist vorgesehen, dass der Anschluss mindestens einer der Hohlräder am Verbindungsringelement über biegeweiche Anschlussmittel zum Ausgleich von Verkippungen und Verschiebungen aufgrund rotorseitiger Getriebebelastung erfolgt. Durch diese speziellen getriebeeingangsseitigen Anschlussmittel werden störende äußere Kräfte und Momente von dem zu übertragenden Drehmoment getrennt und in das Getriebegehäuse eingeleitet.

Vorzugsweise sind die biegeweichen Anschlussmittel nach Art einer kardanischen Entkopplungseinheit ausgebildet. Durch eine vorzugsweise doppelkardanische Anbindung der beiden Hohlräder der parallelgeschalteten Planetenstufen können Wälzlagerverformungen am Großwälzlager aufgrund der störenden äußeren Kräfte und Momente nicht zur Verzahnung der beiden Planetenstufen gelangen, welche somit verschleißminimal mit optimalem Zahneingriff das wirksame Antriebsdrehmoment umsetzen können.

Die kardanische Entkopplungseinheit kann durch eine Innenverzahnung des Verbindungsringelementes mit einer korrespondierenden Hohlradaußenverzahnung gebildet sein, indem diese Verzahnungen nach Art einer Bogenzahnkupplung zusammenwirken. Diese Bogenzahnkupplung toleriert Verkippungen und Verschiebungen aufgrund der rotorseitigen Getriebebelastung. Durch die hierdurch geschaffene doppelkardanische Anbindung der Hohlräder wird allein das zu übertragende Drehmomentgetriebe eingangsseitig weitergegeben. Es ist jedoch auch denkbar, die Wirkung einer kardanischen Entkopplung durch andere Konstruktionselemente, wie beispielsweise flexible Lamellenelemente oder nachgiebige Hülsenfedern und dergleichen zu erzielen.

Zur Gewährleistung eines günstigen Kraftflusses sollte der Außendurchmesser der Rotornabe in etwa dem Außendurchmesser des Verbindungsringelementes entsprechen. Unter dieser Voraussetzung kann die Verbindungsstelle zwischen beiden Bauteilen nach Art einer Flanschverbindung ausgebildet werden, so dass der Rotor über die Rotornabe mit dem die Eingangswelle des Getriebes bildenden Verbindungsringelement verschraubbar ist.

Ebenfalls vorzugsweise ist das erfindungsgemäße Großwälzlager nach Art eines Momentenlagers ausgebildet; speziell eignet sich hierfür ein Doppel-Kegelrollenlager. Anstelle eines einzigen Großwälzlagers ist es natürlich auch denkbar, mehrere Einzellager in Reihe anzuordnen. Im Falle eines einzigen Großwälzlagers ist der Lagerinnenring vorzugsweise zur Anbringung am Verbindungsringelement vorgesehen. Insoweit ist das Großwälzlager über den Lagerinnenring auf das Verbindungselement aufgeschoben. Der Lageraußenring des Großwälzlagers ist an dem gegenüber ortsfesten Getriebegehäuse angebracht. Die Anbringung des Lageraußenrings am Getriebegehäuse erfolgt vorzugsweise durch eine flanschartige Verschraubung, so dass das Großwälzlager erforderlichenfalls auf einfache Weise ausgetauscht werden kann. Durch die gewählte Art der Anbindung mit stehendem Lageraußenring und drehendem Lagerinnenring wird im Gegensatz zum eingangs angeführten Stand der Technik das gesamte Werkstoffvolumen des Lagerinnenringes durch die im Großwälzlager auftretende Umfangslast beansprucht und nicht nur ein Teil hiervon, da der in herkömmlicher Weise stehende Lagerinnenring eine Punktlast erhält.

Erfindungsgemäß wird der getriebeeingangsseitige Drehmomentenfluss zwecks Leistungsverzweigung über mindestens zwei, vorzugsweise genau zwei Planetenstufen geleitet, indem die beiden Hohlräder der beiden Planetenstufe angetrieben werden, wobei die beiden Planetenstufen über die Sonnenradwelle der ausgangsseitigen Planetenstufe mit dem Planetensteg der eingangsseitigen Planetenstufe gekoppelt sind. Der Planetenträger der einen Planetenstufe wird hierbei über das Sonnenrad der anderen Planetenstufe angetrieben. Der Planetenträger der zweiten Planetenstufe ist dem gegenüber ortsfest angeordnet. Damit das abtriebsseitig der zweiten Planetenstufe angeordnete Sonnenrad das Drehmoment zum Planetenträger der ersten Planetenstufe übertragen kann, wird vorgeschlagen, dieses als Hohlwelle auszubilden, wobei vom Sonnenrad der ersten Planentenstufe eine Sonnenradwelle ausgeht, die sich durch diese Hohlwelle hindurch erstreckt. Hierdurch wird eine insgesamt kompakte Bauform erzielt.

Um eine möglichst kompakte Bauform zu erhalten wird vorgeschlagen, das Hohlrad der einen Planetenstufe innerhalb des vom Verbindungsringelement gebildeten Ringraumes angeordnet ist, wogegen das Hohlrad der anderen Planetenstufe in Axialrichtung dem Großwälzlager nachgeordnet ist.

Gemäß einer weiteren die Erfindung verbessernden Maßnahme ist vorgesehen, dass der zentralen Sonnenradwelle eine abtriebsseitige Stirnradstufe nachgeschaltet ist, welche eine weitere Übersetzungsstufe darstellt. An einem gegenüber der zentralen Sonnenwelle achsversetzten Abtriebsritzel dieser Stirnradstufe wird der elektrische Generator angeschlossen.

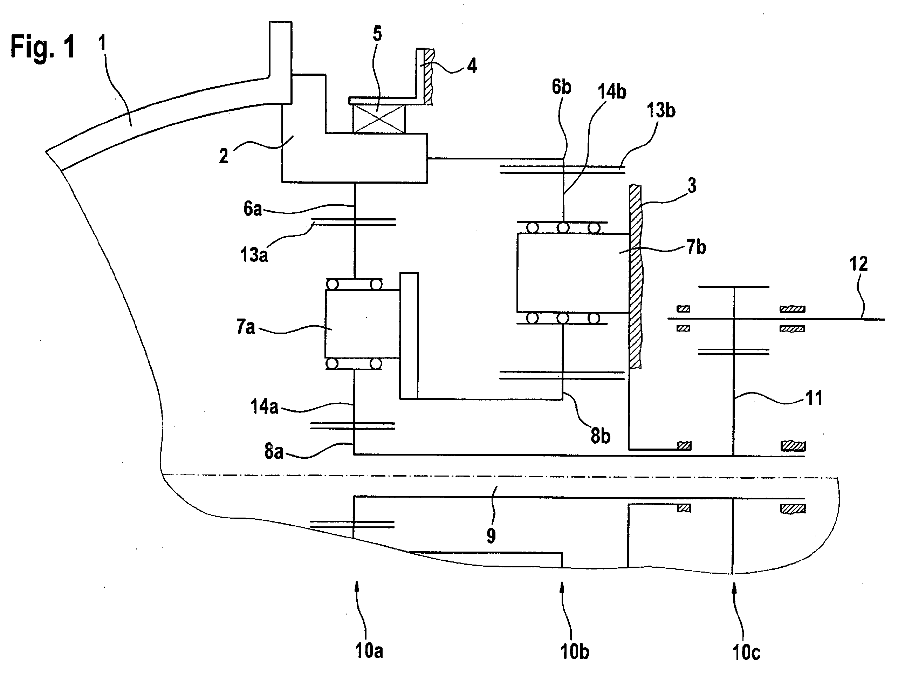

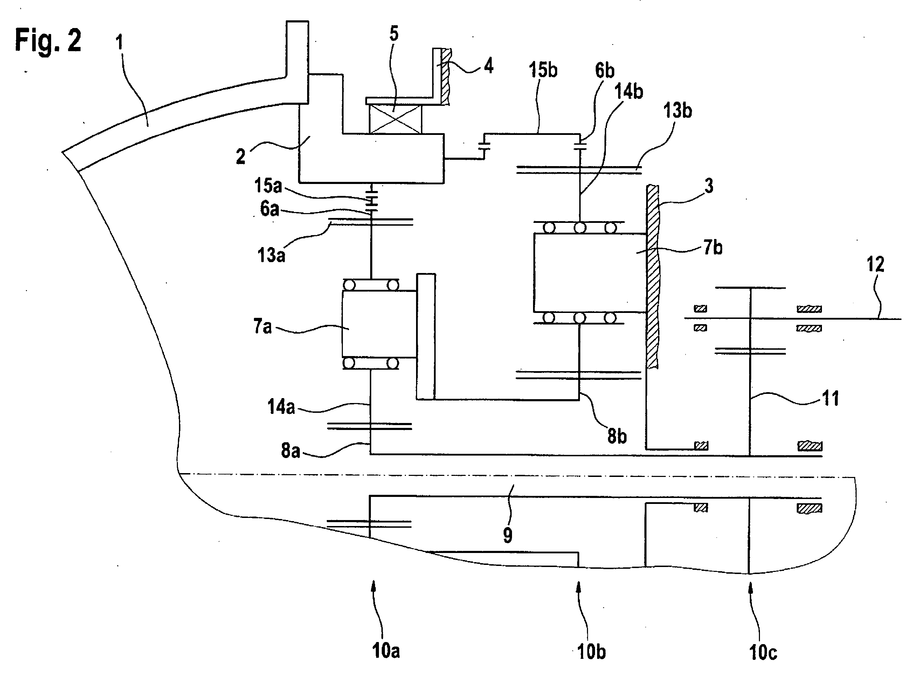

Weitere, die Erfindung verbessernde Maßnahmen werden nachstehend gemeinsam mit der Beschreibung eines bevorzugten Ausführungsbeispiels anhand der Zeichnung näher dargestellt. Die Figuren 1 und 2 zeigen einen schematischen Teilschnitt durch ein leistungsverzweigtes Windkraftgetriebe.

Gemäß Figur 1 wird eine Rotornabe 1 eines - nicht weiter dargestellten - Rotors an einem getriebeeingangsseitiges Verbindungsringelement 2 angebracht. Der Außendurchmesser der Rotornabe 1 entspricht hier in etwa dem Außendurchmesser des Verbindungsringelementes 2, welcher wiederum in etwa dem Außendurchmesser bzw. den äußeren Abmessungen eines die Getriebebauteile enthaltenen Getriebegehäuses 3 entspricht. Das Getriebegehäuse 3 ist ortsfest mit - einer nicht weiter dargestellten - Trägerstruktur der Kabine an der Spitze eines Turms einer Windkraftanlage verbunden.

Das getriebeeingangsseitige Verbindungsringelement 2 ist über ein Großwälzlager 5 drehbar am drehfesten Getriebegehäuse 3 gelagert, und zwar über dessen Lageraußenring. Der Lagerinnenring des Großwälzlagesr 5 nimmt dagegen das Verbindungsringelement 2 auf.

Das Großwälzlager 5 erfüllt die Funktion eines Momentenlagers, wobei das antriebsseitige Drehmoment über das hierin eingesetzte Verbindungsringelement 2 an Hohlräder 6a und 6b zweier parallel geschalteter leistungsverzweigender Planetenstufen 10a bzw. 10b weiterleitet. Neben dem Hohlrad 6a der ersten Planetenstufe 10a ist ebenfalls der Planetenträger der ersten Planetenstufe 10a angetrieben - und zwar über die zweite Planetenstufe 10b - so dass ein abtriebsseitiges Sonnenrad 8a den Kraftfluss weiterleitet. Diese Weiterleitung erfolgt über eine vom Sonnenrad 8a ausgehende zentrale Sonnenradwelle 9.

Die Planetenräder 14a am Planetenträger 7a der ersten Planetenstufe 10a werden über ein abtriebsseitiges Innenrad 8b der zweiten Planetenstufe 10b angetrieben. Im Rahmen der zweiten Planetenstufe 10b ist der die Planetenräder 14b aufweisende Planetenträger 7b ortsfest mit dem Gehäuse 3 ausgebildet. Das Sonnenrad 8b der zweiten Planetenstufe 10b ist als Hohlwelle ausgebildet, so dass sich die Sonnenradwelle 9 koaxial hindurch erstrecken kann.

Der zentralen Sonnenradwelle 9 ist eine abtriebsseitige Stirnradstufe 10c nachgeschaltet. Die Stirnradstufe 10c besteht aus einem drehfest mit der Sonnenradwelle 9 verbundenen Abtriebszahnrad 11, das mit einem achsversetzt zur Sonnenwelle 9 angeordneten Abtriebsritzel 12 kämmt. Das Abtriebsritzel 12 geht antriebsseitig dem - nicht weiter dargestellten - elektrischen Generator zur Erzeugung von elektrischem Wechselstrom zu.

Zum Entkoppeln der vorstehend beschriebenen Getriebeteile von störenden, vom Rotor eingebrachten Biegemomenten und dergleichen sind kardanische Entkopplungsmittel zwischen dem Verbindungsringelement 2 und den beiden hierüber angetriebenen Hohlrädern 6a und 6b der parallel geschalteten Planetenstufen 10a und 10b vorgesehen.

Nach Figur 2 sind die kardanischen Entkopplungsmittel nach Art einer Bogenzahnkupplung 15a, 15b ausgebildet. Zu diesem Zwecke besitzt das Verbindungsringelement 2 zwei zueinander axial beabstandet angebrachte Innenverzahnungen 13a und 13b, welche mit korrespondierenden Außenverzahnungen an den Hohlrädern 6a bzw. 6b kämmen. Die Zahngeometrie entspricht hierbei der einer üblichen Bogenzahnkupplung. Hierdurch werden Verkippungen und Verschiebungen aufgrund der rotorseitigen Getriebebelastung ausgeglichen. Ansonsten entspricht dieses Ausführungsbeispiel dem vorstehend beschriebenen Ausführungsbeispiel.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche umfasst sind. So ist es beispielsweise auch möglich, die kardanischen Entkopplungsmittel zur Neutralisierung der rotorseitigen Getriebebelastung auf andere Weise auszubilden, z. B. mittels Lammellenelementen oder dergleichen. Weiterhin ist es auch möglich, die über parallel geschaltete Planetenstufen umgesetzte Leistungsverzweigung durch eine andere, geeignete Verschaltung der Getriebeelemente umzusetzen. Ferner sei darauf hingewiesen, dass die nachgeschaltete Stirnradstufe bei Bedarf auch weggelassen werden kann.

### Bezugszeichenliste

- 1: Rotornabe
- 2: Verbindungsringelement
- 3: Getriebegehäuse
- 4: Trägerkonstruktion
- 5: Großwälzlager
- 6: Hohlrad
- 7: Planetenträger
- 8: Sonnenrad
- 9: Sonnenradwelle
- 10a: erste Planetenstufe
- 10b: zweite Planetenstufe
- 10c: Stirnradstufe
- 11: Abtriebszahnrad
- 12: Abtriebsritzel
- 13: Innenverzahnung
- 14: Planetenrad
- 15: Bogenzahnkupplung

## Patentansprüche

1. Leistungsverzweigtes Windkraftgetriebe zur Übertragung eines von einer Rotornabe (1) erzeugten Drehmoments auf ein relativ hierzu schnellerdrehendes Abtriebsritzel (12) zum Antrieb eines elektrischen Generators, wobei mindestens zwei Planetenstufen (10a, 10b) zur getriebeintern leistungsverzweigten Übersetzung vorgesehen sind, wobei ferner zur Ankopplung der Rotornabe (1) ein getriebeeingangsseitiges Verbindungsringelement (2) vorgesehen ist, das über ein Großwälzlager (5) drehbar gegenüber einem drehfesten Getriebegehäuse (3) gelagert ist, indem der Lagerinnenring des Großwälzlagers (3) am Verbindungsringelement (2) angebracht ist, wogegen der Lageraußenring des Großwälzlagers (3) an dem drehfesten Getriebegehäuse (3) angebracht ist,
dadurch gekennzeichet, dass das Verbindungsringelement (2) das von der Rotornabe (1) erzeugte Drehmoment an jeweils am Verbindungsringelement (2) angeschlossene Hohlräder (6a, 6b) parallel angeordneter Planetenstufen (10a, 10b) verteilt.

2. Leistungsverzweigtes Windkraftgetriebe nach Anspruch 1,
**dadurch gekennzeichnet, dass** der Anschluss mindestens einer der Hohlräder (6a, 6b) am Verbindungsringelement (2) über biegeweiche Anschlussmittel zum Ausgleich von Verkippungen und Verschiebungen aufgrund rotorseitiger Getriebebelastung erfolgt.

3. Leistungsverzweigtes Windkraftgetriebe nach Anspruch 2,
**dadurch gekennzeichnet, dass** die biegeweichen Anschlussmittel nach Art einer kardanischen Entkopplungseinheit ausgebildet sind.

4. Leistungsverzweigtes Windkraftgetriebe nach Anspruch 3,
**dadurch gekennzeichnet, dass** die kardanische Entkopplungseinheit durch Eingriff nach Art einer Bogenzahnkupplung (15a, 15b) mindestens einer Innenverzahnung (13a, 13b) am Verbindungsringelement (2) mit korrespondierenden Außenverzahnungen an den Hohlrädern (6a, 6b) gebildet sind.

5. Leistungsverzweigtes Windkraftgetriebe nach Anspruch 1,
**dadurch gekennzeichnet, dass** der Außendurchmesser der Rotornabe (1) dem Außendurchmesser des Verbindungsringelements (2) entspricht.

6. Leistungsverzweigtes Windkraftgetriebe nach Anspruch 1,
**dadurch gekennzeichnet, dass** das Verbindungsringelement (2) über eine Flanschverbindung mit der Rotornabe (1) verschraubbar ist.

7. Leistungsverzweigtes Windkraftgetriebe nach Anspruch 1,
**dadurch gekennzeichnet, dass** das Großwälzlager (5) nach Art eines Momentenlagers ausgebildet ist.

8. Leistungsverzweigtes Windkraftgetriebe nach Anspruch 4,
**dadurch gekennzeichnet, dass** das als Momentenlager ausgebildete Großwälzlager (5) ein Doppel-Kegelrollenlager ist.

9. Leistungsverzweigtes Windkraftgetriebe nach Anspruch 1,
**dadurch gekennzeichnet, dass** der neben dem Hohlrad (6a) der ersten Planetenstufe (10a) ebenfalls angetriebene Planetenträger (7a) den Kraftfluss an ein abtriebsseitiges Sonnenrad (8a) weiterleitet.

10. Leistungsverzweigtes Windkraftgetriebe nach Anspruch 9,
**dadurch gekennzeichnet, dass** das abtriebsseitige Sonnenrad (8a) der ersten Planetenstufe (10a) den Kraftfluss an eine zentrale Sonnenradwelle (9) weiterleitet, welche sich zur Abtriebsseite des Getriebegehäuses (3) erstreckt.

11. Leistungsverzweigtes Windkraftgetriebe nach Anspruch 1,
**dadurch gekennzeichnet, dass** ein Planetenträger (7b) der zweiten Planetenstufe (10b) ortsfest angeordnet ist, wobei ein abtriebsseitiges Sonnenrad (8b) den Planetenträger (7a) der ersten Planetenstufe (10a) antreibt.

12. Leistungsverzweigtes Windkraftgetriebe nach Anspruch 11,
**dadurch gekennzeichnet, dass** das Sonnenrad (8b) der zweiten Planetenstufe (10b) als Hohlwelle ausgebildet ist, die koaxial zu der sich hindurcherstreckenden Sonnenradwelle (9) der ersten Planetenstufe (10a) angeordnet ist

13. Leistungsverzweigtes Windkraftgetriebe nach Anspruch 10,
**dadurch gekennzeichnet, dass** der zentralen Sonnenradwelle (9) eine abtriebsseitige Stirnradstufe (10c) nachgeschaltet ist, deren gegenüber der zentralen Sonnenradwelle (9) achsversetztes Abtriebsritzel (12) zum Antrieb des elektrischen Generators vorgesehen ist.

14. Leistungsverzweigtes Windkraftgetriebe nach einem der vorstehenden Ansprüche,
**dadurch gekennzeichnet, dass** das eine Hohlrad (6a) zumindest größtenteils innerhalb des vom Verbindungsringelement (2) gebildeten Ringraumes angeordnet ist, wogegen das andere Hohlrad (6b) in Axialrichtung dem Großwälzlager (5) nachgeordnet ist.

## Claims

1. Power-split wind power gearbox for transmission of a torque, which is produced by a rotor hub (1) to an output-drive pinion (12) which rotates at a higher speed relative thereto, for driving an electrical generator, with at least two planet stages (10a, 10b) being provided for power-split stepping-up within the gearbox, furthermore with a connecting ring element (2) being provided for coupling the rotor hub (1), which connecting ring element (2) is on the input side of the gearbox and is borne via a large roller bearing (5) such that it can rotate with respect to a rotationally fixed gearbox housing (3), in that the bearing inner ring of the large roller bearing (5) is fitted to the connecting ring element (2) while, in contrast, the bearing outer ring of the large roller bearing (5) is fitted to the rotationally fixed gearbox housing (3), **characterized in that** the connecting ring element (2) distributes the torque which is produced by the rotor hub (1) between planet stages (10a, 10b) which are arranged in parallel with annular gears (6a, 6b) which are in each case connected to the connecting ring element (2).

2. Power-split wind power gearbox according to Claim 1,
**characterized in that** at least one of the annular gears (6a, 6b) is connected to the connecting ring element (2) via easily flexible connecting means in order to compensate for tilting and shifting resulting from a rotor-side gearbox load.

3. Power-split wind power gearbox according to Claim 2,
**characterized in that** easily flexible connecting means are in the form of a universally jointed decoupling unit.

4. Power-split wind power gearbox according to Claim 3,
**characterized in that** the universally jointed decoupling unit is formed by engagement in the form of a curved tooth coupling (15a, 15b) of at least one internal tooth system (13a, 13b) on the connecting ring element (2) with corresponding external tooth systems on the annular gears (6a, 6b).

5. Power-split wind power gearbox according to Claim 1,
**characterized in that** the external diameter of the rotor hub (1) corresponds to the external diameter of the connecting ring element (2).

6. Power-split wind power gearbox according to Claim 1,
**characterized in that** the connecting ring element (2) can be screwed to the rotor hub (1) via a flange connection.

7. Power-split wind power gearbox according to Claim 1,
**characterized in that** the large roller bearing (5) is in the form of a torque bearing.

8. Power-split wind power gearbox according to Claim 4,
**characterized in that** the large roller bearing (5) which is in the form of a torque bearing, is a double conical roller bearing.

9. Power-split wind power gearbox according to Claim 1,
**characterized in that** the planet support (7a) which is likewise driven as well as the annular gear (6a) in the first planet stage (10a), passes on the power flow to a sun gear (8a) on the output-drive side.

10. Power-split wind power gearbox according to Claim 9,
**characterized in that** the sun gear (8a) on the output-drive side of the first planet stage (10a) passes on the power flow to a central sun gear shaft (9), which extends to the output-drive side of the gearbox housing (3).

11. Power-split wind power gearbox according to Claim 1,
**characterized in that** a planet support (7b) of the second planet stage (10b) is arranged in a fixed position, with a sun gear (8b) on the output-drive side driving the planet support (7a) of the first planet stage (10a).

12. Power-split wind power gearbox according to Claim 11,
**characterized in that** the sun gear (8b) of the second planet stage (10b) is in the form of a hollow shaft, which is arranged coaxially with respect to the sun gear shaft (9), which passes through it, of the first planet stage (10a).

13. Power-split wind power gearbox according to Claim 10, **characterized in that** the central sun gear shaft (9) is followed by a spur gear stage (10c) on the output-drive side, whose output-drive pinion (12), which is axially offset with respect to the central sun gear shaft (9), is provided in order to drive the electrical generator.

14. Power-split wind power gearbox according to one of the preceding claims, **characterized in that** at least the majority of the one annular gear (6a) is arranged within the annular space formed by the connecting ring element (2), while in contrast the other annular gear (6b) is arranged after the large roller bearing (5) in the axial direction.

## Revendications

1. Transmission éolienne à ramification de puissance destinée à transférer le couple de rotation délivré par le moyeu (1) d'un rotor à un pignon entraîné (12) tournant plus rapidement que le moyeu en vue d'entraîner un générateur électrique,
au moins deux étages planétaires (10a, 10b) étant prévus pour permettre un transfert interne à ramification de puissance,
un élément annulaire de liaison (2) situé du côté de l'entrée de la transmission étant en outre prévu pour accoupler le moyeu (1) du rotor et étant monté de manière à pouvoir tourner par l'intermédiaire d'un grand palier de roulement (5) par rapport à un boîtier de transmission (3) fixe en rotation par le fait que la bague intérieure de palier du grand palier de roulement (5) est installée sur l'élément annulaire de liaison (2), la bague extérieure de palier du grand palier de roulement (5) étant en revanche prévue sur le boîtier de transmission (3) fixe en rotation,
**caractérisée en ce que**
l'élément annulaire de liaison (2) répartit le couple de rotation produit par le moyeu (1) du rotor entre des roues creuses (6a, 6b) d'étages planétaires (10a, 10b) disposés en parallèle et raccordés chacun à l'élément annulaire de liaison (2).

2. Transmission éolienne à ramification de puissance selon la revendication 1, **caractérisée en ce que** le raccordement d'au moins l'une des roues creuses (6a, 6b) à l'élément annulaire de liaison (2) s'effectue par des moyens de raccordement déformables en flexion en vue de compenser les inclinaisons et déplacements qui résultent de la sollicitation exercée par le rotor sur la transmission.

3. Transmission éolienne à ramification de puissance selon la revendication 2, **caractérisée en ce que** les moyens de raccordement déformables en flexion sont configurés en unité de découplage de type Cardan.

4. Transmission éolienne à ramification de puissance selon la revendication 3, **caractérisée en ce que** l'unité de découplage de type Cardan est formée par engagement à la manière d'un accouplement (15a, 15b) à denture sphérique entre au moins une denture intérieure (13a, 13b) prévue sur l'élément annulaire de liaison (2) et des dentures extérieures correspondantes prévues sur les roues creuses (6a, 6b).

5. Transmission éolienne à ramification de puissance selon la revendication 1, **caractérisée en ce que** le diamètre extérieur du moyeu (1) du rotor correspond au diamètre extérieur de l'élément annulaire de liaison (2).

6. Transmission éolienne à ramification de puissance selon la revendication 1, **caractérisée en ce que** l'élément annulaire de liaison (2) peut être vissé sur le moyeu (1) du rotor au moyen d'une liaison à bride.

7. Transmission éolienne à ramification de puissance selon la revendication 1, **caractérisée en ce que** le grand palier de roulement (5) est configuré comme palier à couple.

8. Transmission éolienne à ramification de puissance selon la revendication 4, **caractérisée en ce que** le grand palier de roulement (5) configuré comme palier à couple est un palier double à galet conique.

9. Transmission éolienne à ramification de puissance selon la revendication 1, **caractérisée en ce que** le porte-planétaire (7a) également entraîné en plus de la roue creuse (6a) du premier étage planétaire (10a) transmet la force à une roue solaire (8a) située côté entraîné.

10. Transmission éolienne à ramification de puissance selon la revendication 9, **caractérisée en ce que** la roue solaire (8a) du premier étage planétaire (10a), située du côté entraîné, transmet la force à un arbre central (9) de roue solaire qui s'étend du côté entraîné du boîtier de transmission (3).

11. Transmission éolienne à ramification de puissance selon la revendication 1, **caractérisée en ce qu'**un porte-planétaire (7b) du deuxième étage planétaire (10b) est disposé en position fixe, une roue solaire (8b) du porte-planétaire (7a), située du côté entraîné, entraînant le premier étage planétaire (10a).

12. Transmission éolienne à ramification de puissance selon la revendication 11, **caractérisée en ce que** la roue solaire (8b) du deuxième étage planétaire (10b) est configurée comme arbre creux disposé coaxialement par rapport à l'arbre (9) de roue solaire du premier étage planétaire (10a) qui traverse le premier arbre creux.

13. Transmission éolienne à ramification de puissance selon la revendication 10, **caractérisée en ce que** l'arbre central (9) de la roue solaire est suivi par un étage (10c) à roue frontale côté entraîné dont le pignon entraîné (12) dont l'axe est décalé par rapport à l'arbre central (9) de la roue solaire est prévu pour entraîner le générateur électrique.

14. Transmission éolienne à ramification de puissance selon l'une des revendications précédentes, **caractérisée en ce qu'**une roue creuse (6a) est disposée au moins pour sa plus grande part à l'intérieur de l'espace annulaire formé par l'élément annulaire de liaison (2) et **en ce qu'**en revanche, l'autre roue creuse (6b) est disposée en aval du grand palier de roulement (5) dans la direction axiale.
